(19) **Europäisches Patentamt / European Patent Office / Office européen des brevets**

(11) **EP 2 915 226 B1**

(12) **FASCICULE DE BREVET EUROPEEN**

(45) Date de publication et mention
de la délivrance du brevet:
**26.10.2016 Bulletin 2016/43**

(21) Numéro de dépôt: **13785405.5**

(22) Date de dépôt: **28.10.2013**

(51) Int Cl.:
*H01S 3/06* (2006.01)   *H01S 3/00* (2006.01)

(86) Numéro de dépôt international:
**PCT/EP2013/072478**

(87) Numéro de publication internationale:
**WO 2014/067888 (08.05.2014 Gazette 2014/19)**

(54) **DISPOSITIF D'AMPLIFICATION D'UN LASER IMPULSIONNEL A CONTRASTE TEMPOREL AMELIORE**

VORRICHTUNG ZUR VERSTÄRKUNG EINES LASERIMPULSES MIT VERBESSERTEM ZEITLICHEM KONTRAST

DEVICE FOR AMPLIFYING A LASER PULSE HAVING IMPROVED TEMPORAL CONTRAST

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.10.2012 FR 1202935**

(43) Date de publication de la demande:
**09.09.2015 Bulletin 2015/37**

(73) Titulaire: **Thales**
**92400 Courbevoie (FR)**

(72) Inventeurs:
• **LAUX, Sébastien**
**F-91120 Palaiseau (FR)**
• **CASAGRANDE, Olivier**
**44750 Campbon (FR)**
• **JOUGLA, Paul**
**F-75015 Paris (FR)**

(74) Mandataire: **Henriot, Marie-Pierre**
**Marks & Clerk France**
**Conseils en Propriété Industrielle**
**Immeuble Visium**
**22, Avenue Aristide Briand**
**94117 Arcueil Cedex (FR)**

(56) Documents cités:
WO-A1-01/43242          WO-A2-2006/081175
DE-A1-102004 009 593

EP 2 915 226 B1

**Description**

Le domaine de l'invention est celui des sources laser à état solide pour applications scientifiques, industrielles, médicales et militaires. Plus spécifiquement, elle est utilisée de façon très avantageuse pour des matériaux de milieu amplificateur (tel qu'un cristal) qui ont une relativement faible épaisseur comparée à leur ouverture selon l'axe de propagation du faisceau laser, typiquement inférieure à 1:3.

La technologie des lasers de pompage a sensiblement évolué ces dernières années et il devient désormais possible de disposer d'une source laser impulsionnel qui donne une puissance moyenne de pompage de l'ordre de la centaine de Watt et un dépôt thermique dans le cristal du même ordre de grandeur.

Différentes solutions ont été mises en oeuvre pour résoudre le problème d'extraction de l'énergie thermique dans le cristal :

- soit le cristal est refroidi de manière conventionnelle par une circulation d'eau sur sa périphérie ce qui est une solution efficace mais ne permet pas de réaliser des systèmes fonctionnant à une centaine de Watt et plus,
- soit le cristal est refroidi en utilisant un système cryogénique qui augmente la conductivité thermique du cristal pour améliorer le refroidissement de ce dernier et réduire les effets de focalisation liés à la charge thermique dans le cristal induite par le pompage optique.

Ces configurations présentent des inconvénients notamment en termes de coûts, d'encombrement et de vibrations.

Dans les lasers de forte puissance moyenne (> 10 Watt), ces solutions ne sont pas satisfaisantes et on utilise un refroidissement en face arrière.

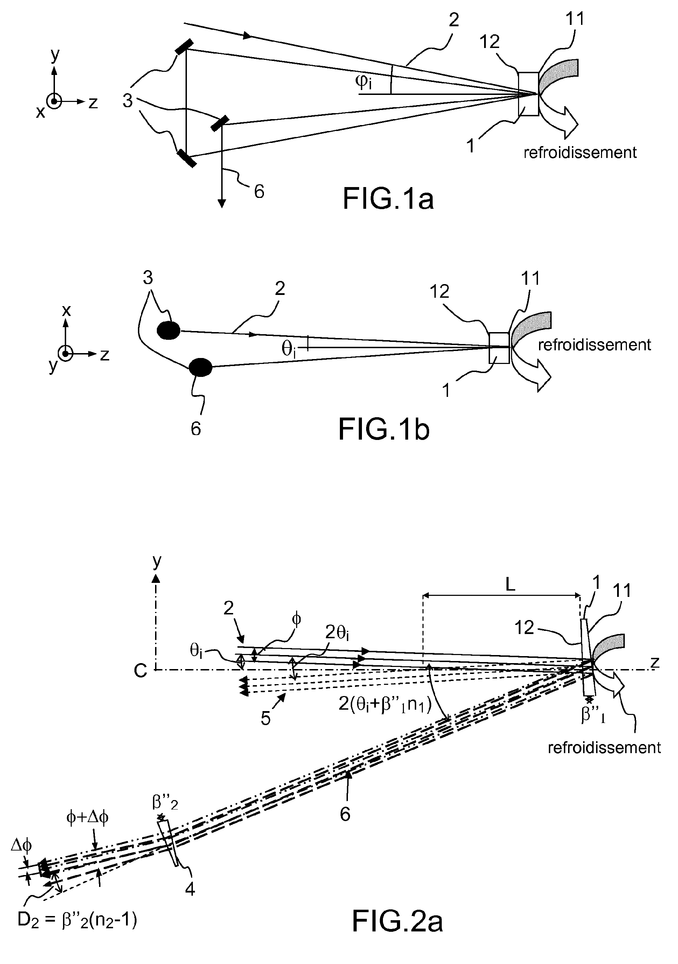

Un exemple de configuration de dispositif d'amplification multipassage mettant en oeuvre un refroidissement du milieu amplificateur 1 par un refroidissement arrière (illustré par la flèche) est illustré figures 1. Le faisceau à amplifier 2 arrive sur le milieu amplificateur 1 selon un angle d'incidence $\varphi_i$ selon la vue de face (fig 1a) et $\theta_i$ selon la vue de dessus (fig 1 b). Ce dispositif est multipassage du fait que le faisceau 2 traverse plusieurs fois le milieu amplificateur 1 grâce aux miroirs 3. La face arrière 11 du milieu amplificateur est réfléchissante pour réfléchir le faisceau vers le milieu amplificateur. Le faisceau amplifié 6 sort selon la direction Oy, et n'est visible que sur la figure 1a. Sur ces figures, le faisceau est matérialisé par un seul rayon.

Le refroidissement peut être obtenu au moyen d'un fluide, liquide ou gaz, ou d'un solide. Ce refroidissement par la face arrière permet d'augmenter la surface d'échange thermique. Il permet par ailleurs de générer un gradient thermique dans la direction de propagation du laser dans le cristal, et ainsi d'atteindre une extraction thermique élevée. Les variations d'indice liées aux variations de température dans le cristal sont des gradients majoritairement orientés dans la même direction que la direction de propagation du faisceau laser. Mais apparaît alors un problème de contraste temporel qui n'était pas rencontré dans les solutions précédentes. On définit le contraste temporel par le rapport entre l'intensité de l'impulsion principale et le pied de l'impulsion et/ou des éventuelles impulsions parasites.

En conséquence, il demeure à ce jour un besoin pour un dispositif d'amplification donnant simultanément satisfaction à l'ensemble des exigences précitées, en termes de refroidissement et de contraste temporel.

Plus précisément l'invention a pour objet un dispositif d'amplification d'un faisceau laser impulsionnel multi longueur d'onde, qui comprend :

- un milieu amplificateur solide d'indice de réfraction $n_1$, avec deux faces planes, une face avant destinée à recevoir le faisceau à amplifier dit incident et une face arrière réfléchissante,
- un dispositif de refroidissement du milieu amplificateur par la face arrière.

Il est principalement caractérisé en ce que la face avant du milieu est inclinée par rapport à sa face arrière d'une première inclinaison non nulle et en ce qu'il comprend en outre un prisme trapézoïdal d'indice de réfraction $n_2$, avec une face d'entrée et une face de sortie qui forment entre elles une deuxième inclinaison non nulle, situé en un emplacement destiné à être sur le trajet du faisceau réfléchi par la face arrière et réfracté par la face avant du milieu amplificateur (c'est-à-dire le faisceau en sortie du milieu amplificateur après l'avoir traversé aussi désigné faisceau amplifié), les première et deuxième inclinaisons étant telles que les faisceaux de chaque longueur d'onde soient parallèles entre eux en sortie du prisme.

Ainsi, après propagation dans le milieu amplificateur, les réflexions parasites sont séparées spatialement de l'impulsion principale et le contraste temporel n'est plus dégradé par les réflexions parasites.

De préférence, $n_1 >> (n_1-1)/ v_1$, $v_1$ étant la constringence du milieu amplificateur. Cela vise à préserver le caractère multilongueur d'onde du faisceau en sortie du prisme.

Selon une caractéristique de l'invention, la face avant du milieu amplificateur étant destinée à recevoir le faisceau incident et réfléchir un faisceau dit parasite, le prisme est situé en dehors du trajet de ce faisceau parasite, c'est-à-dire à une distance du milieu amplificateur où le faisceau parasite est séparé du faisceau incident.

Selon une autre caractéristique de l'invention, la face avant du milieu amplificateur peut être anti-reflet. Eventuellement un écran de filtrage est situé en un emplacement destiné à être sur le trajet du faisceau parasite.

Le milieu amplificateur est par exemple un cristal ou un verre ou un polymère.

Le faisceau à amplifier a typiquement une puissance moyenne supérieure à 10 W.

D'autres caractéristiques et avantages de l'invention apparaîtront à la lecture de la description détaillée qui suit, faite à titre d'exemple non limitatif et en référence aux dessins annexés dans lesquels :

les figures 1 déjà décrites représentent schématiquement un dispositif d'amplification multipassage à refroidissement par la face arrière selon l'état de la technique, vu de face (fig 1a) et vu de dessus (fig 1 b),
les figures 2 représentent un exemple de dispositif d'amplification à refroidissement par la face arrière selon l'invention, vu de face (fig 2a), vu de dessus (fig 2b), et vu en perspective (fig 2c).

D'une figure à l'autre, les mêmes éléments sont repérés par les mêmes références.

Dans les deux solutions d'amplification décrites en préambule, le faisceau laser à amplifier passe au travers du cristal en entrant d'un côté et sortant de l'autre côté, et le faisceau parasite, du fait des réflexions parasites aux interfaces air/cristal parcourt alors un chemin optique plus long. Le contraste pré-impulsion n'est alors pas dégradé car les impulsions parasites (=faisceau parasite) arrivent après l'impulsion principale (=faisceau amplifié).

Les dispositifs d'amplification laser à refroidissement par la face arrière obligent à un repliement géométrique du faisceau du fait de la face arrière réfléchissante, de sorte que la face de sortie du cristal est la même que la face d'entrée, ce qui implique que les impulsions parasites (dues aux réflexions parasites sur la face avant) se retrouvent avant l'impulsion principale dégradant par conséquent le contraste temporel de l'impulsion.

Pour éviter cette dégradation, l'interface air/cristal est modifiée pour séparer l'impulsion principale et les impulsions parasites : on donne un léger angle à la face d'entrée du cristal amplificateur, cette face d'entrée formant ainsi une inclinaison avec la face arrière. Ainsi, après propagation, les impulsions parasites sont séparées spatialement de l'impulsion principale.

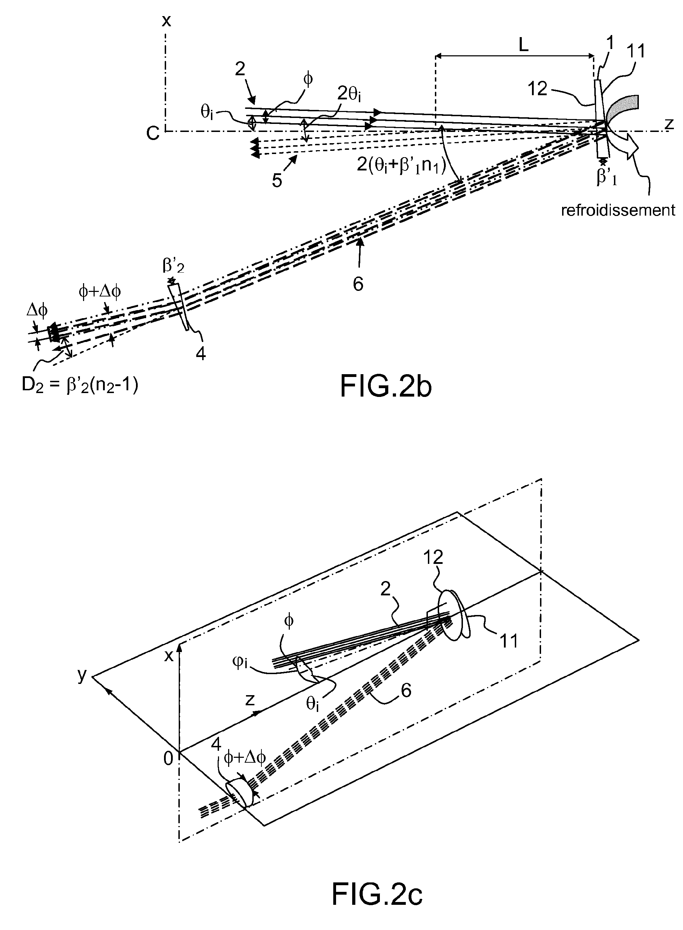

Comme on peut le voir figure 2b qui correspond à la vue de dessus de la figure 1b mais sur laquelle on n'a pas représenté les miroirs pour ne pas la surcharger, le faisceau (=l'impulsion) à amplifier 2 de diamètre $\phi$ arrive sur le milieu amplificateur 1 avec un angle d'incidence $\theta_i$ dans le plan xOz sur la face avant 12 qui est perpendiculaire à Oz. Le faisceau utile est réfléchi par la face arrière 11, le faisceau parasite 5 (en pointillé) par la face avant 12 : le faisceau parasite aussi désigné impulsions parasites, est défléchi sur cette face avant d'un angle $2\theta_i$. Le faisceau 6 amplifié dans le milieu amplificateur 1 aussi désigné impulsion principale, est défléchi en sortie d'un angle $2\beta'_1 n_1$ avec $n_1$ l'indice de réfraction du milieu amplificateur 1.

De même, comme on peut le voir figure 2a qui correspond à la vue de dessus de la figure 1a, le faisceau à amplifier 2 de diamètre $\phi$ arrive sur le milieu amplificateur 1 avec un angle d'incidence $\varphi_i$ dans le plan yOz sur la face avant 12 qui est perpendiculaire à Oz. Le faisceau utile est réfléchi par la face arrière 11, le faisceau parasite 5 (en pointillé) par la face avant 12 ; le faisceau parasite est défléchi sur cette face avant d'un angle $2\varphi_i$. Le faisceau amplifié 6 est défléchi en sortie d'un angle $2\beta''_1 n_1$. Sur ces figures on a $\beta''_1 = \beta'_1$ et $\beta''_2 = \beta'_2$.

La figure 2c est une vue en perspective du dispositif des figures 2a et 2b sur laquelle le faisceau parasite n'est pas montré.

Comme il s'agit d'une source laser multi-longueur d'onde, l'angle $\beta'_1$ (respectivement $\beta''_1$) que forment les faces 12 et 11 dans le plan xOz (respectivement le plan yOz), produit un effet prismatique qui, après passage dans le milieu amplificateur 1, produit une séparation angulaire de l'impulsion principale 6 en fonction de chacune de ses longueurs d'onde. Sur les figures 2, deux longueurs d'onde sont représentées. On ajoute alors un prisme compensateur 4 après la séparation de l'impulsion principale 6 et des impulsions parasites 5, sur le trajet de l'impulsion principale 6 pour corriger cette dispersion spatiale en fonction des longueurs d'onde.

Pour qu'en sortie du prisme 4 les faisceaux de chaque longueur d'onde soient parallèles entre eux, on a la condition d'achromatisation suivante entre l'angle $\beta'_1$ (respectivement $\beta''_1$) des faces du milieu amplificateur 1 et l'angle $\beta'_2$ (respectivement $\beta''_2$) des faces du prisme de compensation 4 :

$$\left(2\beta'_1 \Delta n_1\right) = \left(\beta'_2 \Delta n_2\right) \text{ et respectivement } \left(2\beta''_1 \Delta n_1\right) = \left(\beta''_2 \Delta n_2\right)$$

avec

$$\Delta n_i = \frac{(n_i - 1)}{v_i} \; et \; v_i = \frac{n_i(\lambda_c) - 1}{n_i(\lambda_{max}) - n_i(\lambda_{min})}$$

avec $v_i$ la constringence, $\lambda_c$ la longueur d'onde centrale, $\lambda_{min}$ et $\lambda_{max}$ les limites spectrales du faisceau incident 2, $n_2$ l'indice de réfraction du prime 4.

Dans ces formules, on suppose que les faisceaux se propagent dans l'air ou le vide.

La face avant 12 du milieu amplificateur est avantageusement traitée anti reflet. Il peut néanmoins rester un résidu.

De préférence, on dispose le prisme 4 à une distance L du milieu amplificateur 1, où le faisceau parasite 5 et le faisceau incident 2 sont spatialement séparés c'est-à-dire ne présentent pas de recouvrement entre eux. Plus précisément, L est la distance entre le prisme et le milieu amplificateur, projetée sur l'axe Oz perpendiculaire à la face 12 du prisme 1.

Cette séparation est obtenue pour L telle que :

$$L > \Phi / \tan(2\theta_i) \; et \; L > \Phi / \tan(2\varphi_i).$$

De préférence aussi, on choisit L pour que le faisceau amplifié 6 et le faisceau parasite 5 soient spatialement séparés. On utilise alors préférentiellement le plan xOz pour « éjecter » les impulsions parasites avec donc $\beta''_1 = 0$. La projection $\beta'_1$ de l'angle $\beta_1$ dans le plan xOz est égal à $\beta_1$ alors que la projection $\beta''_1$ de l'angle $\beta_1$ dans le plan yOz est nulle. On peut alors choisir un angle d'incidence nul ($\theta_i = 0$) comme dans l'exemple numérique ci-dessous.

Le prisme 4 ne doit bien sûr pas masquer le faisceau incident 2. De préférence également on choisit L pour que les faisceaux amplifié 6, incident 2 et parasites 5 soient spatialement séparés. Cette séparation est obtenue pour L telle que :

$$L > \phi/\tan(2(\theta_i + \beta'_1 n_1)) \; ou \; L > \phi/\tan(2(\varphi_i + \beta''_1 n_1)).$$

Sur le prisme 4, les composantes spectrales du faisceau 6 incident forment une tache de diamètre $\phi + \Delta\phi$. On notera que $\Delta\phi$ inclut l'augmentation du diamètre introduite par la divergence du faisceau lors de la double traversée du prisme 1 puis celle introduite par la divergence du faisceau sur le trajet entre la face 12 de sortie du prisme 1 et le prisme 4 ; on retrouve le même diamètre $\phi + \Delta\phi$ en sortie de ce prisme correcteur 4. Pour préserver le caractère multi-longueur d'onde du faisceau de sortie, on veut que l'élargissement $\Delta\phi$ du diamètre du faisceau amplifié 6 soit petit devant $\phi$.

C'est le cas car :

$$\Delta\phi = L.\tan\left(2\beta_1 \Delta n_1\right) = L.\tan\left(2\beta_1 \frac{1}{v_1}(n_1 - 1)\right)$$

Or on a toujours $\left(2(\theta_i + \beta_1 n_1)\right) >> 2\beta_1 \frac{1}{v_1}(n_1 - 1)$ car $n_1 >> (n_1-1)/v_1$, ce qui implique que $\Delta\phi << \phi$.

Pour le cas par exemple d'un cristal de saphir dopé aux ions Titane Ti3+ on a :

$\lambda_{min} = 750nm$
$\lambda_{max} = 850nm$
$v_1 = 244$
$n_1 = 1.76$
$\beta_1 = \beta'_1 = \beta''_1 = 1°$
$\theta_i = \varphi_i = 0°$
$L_{min} = \phi / \tan(2.(\theta_i + \beta_1 n_1))$, $L_{min}$ étant la distance L minimale.

L'élargissement $\Delta\phi$ du faisceau amplifié sur la bande 750 nm à 850 nm vaut :

$$\Delta\phi = L_{min}.\tan(2\beta_1\Delta n_1) \approx L_{min}.10^{-4},$$

à comparer à

$$\phi = L_{min}.\ \tan(2.(\theta_i + \beta_1 n_1)) \approx L_{min}.6.10^{-2}.$$

On obtient alors :

$$\Delta\phi/\phi \approx 0{,}16.10^{-2}.$$

Après le prisme correcteur 4 les différentes longueurs d'onde cessent ainsi de se séparer spatialement. Compte tenu des marges optomécaniques à prendre en compte, le décalage latéral $\Delta\phi$ est plutôt de l'ordre de 1 dixième du diamètre $\phi$ du faisceau amplifié. Le phénomène est en tout cas négligeable car on a $\Delta\phi << \phi$.

Le faisceau à amplifier est typiquement un faisceau IR, sans que ce soit limitatif.

Comme indiqué dans les exemples le milieu amplificateur 1 peut être un cristal tel que du saphir dopé au Titane, ou Yb :YAG, Yb :CaF2 ou un matériau polymère, ou un verre ou tout autre matériau à l'état solide. Le matériau du prisme 4 peut être le même que celui de milieu amplificateur 1 ; dans ce cas on a $n_1 = n_2$.

Le dispositif d'amplification selon l'invention est de préférence un dispositif multipassage mais pas nécessairement.

## Revendications

1. Dispositif d'amplification d'un faisceau laser impulsionnel multi longueur d'onde (2), qui comprend :

   - un milieu amplificateur (1) solide d'indice de réfraction $n_1$, avec deux faces planes, une face avant (12) destinée à recevoir le faisceau à amplifier dit incident (2) et une face arrière (11) réfléchissante, la face avant (12) étant inclinée par rapport à sa face arrière (11) d'une première inclinaison non nulle,
   - un dispositif de refroidissement du milieu amplificateur (1) par la face arrière (11),

   **caractérisé en ce qu'**il comprend en outre un prisme trapézoïdal (4) d'indice de réfraction $n_2$, avec une face d'entrée et une face de sortie qui forment entre elles une deuxième inclinaison non nulle, ce prisme étant situé en un emplacement destiné à être sur le trajet du faisceau (6) réfléchi par la face arrière (11) et réfracté par la face avant (12) du milieu amplificateur (1), et les première et deuxième inclinaisons étant telles que les faisceaux de chaque longueur d'onde soient parallèles entre eux en sortie du prisme (4).

2. Dispositif d'amplification d'un faisceau laser impulsionnel multi longueur d'onde selon la revendication précédente, **caractérisé en ce que** la face avant du milieu amplificateur (12) étant perpendiculaire à un axe Oz, la première inclinaison formant un angle $\beta'_1$ sur un plan yOz et $\beta''_1$ sur un plan xOz, la deuxième inclinaison formant un angle $\beta'_2$ sur le plan yOz et $\beta''_2$ sur le plan xOz, on a :

$$2\beta'_1\,.\Delta n_1 = \beta'_2\,.\Delta n_2 \text{ et } 2\beta''_1\,.\Delta n_1 = \beta''_2\,.\Delta n_2.$$

3. Dispositif d'amplification d'un faisceau laser impulsionnel multi longueur d'onde selon l'une des revendications précédentes, **caractérisé en ce que** $n_1 >> (n_1\text{-}1)/ v_1$, $v_1$ étant la constringence du milieu amplificateur.

4. Dispositif d'amplification d'un faisceau laser impulsionnel multi longueur d'onde selon l'une des revendications précédentes, **caractérisé en ce que** la face avant (12) du milieu amplificateur étant destinée à recevoir le faisceau incident (2) et réfléchir un faisceau dit parasite (5), le prisme (4) est situé en dehors du trajet de ce faisceau parasite.

5. Dispositif d'amplification d'un faisceau laser impulsionnel multi longueur d'onde selon l'une des revendications précédentes, **caractérisé en ce que** la face avant (12) du milieu amplificateur est anti-reflet.

**6.** Dispositif d'amplification d'un faisceau laser impulsionnel multi longueur d'onde selon l'une des revendications précédentes, **caractérisé en ce que** $n_1=n_2$.

**7.** Dispositif d'amplification d'un faisceau laser impulsionnel multi spectral selon l'une des revendications précédentes, **caractérisé en ce qu'**il comprend un écran de filtrage situé en un emplacement destiné à être sur le trajet du faisceau réfléchi (5) par la face avant (12) du milieu amplificateur.

**8.** Dispositif d'amplification d'un faisceau laser impulsionnel multi spectral selon l'une des revendications précédentes, **caractérisé en ce que** le milieu amplificateur (1) est un cristal ou un verre ou un polymère.

**9.** Dispositif d'amplification d'un faisceau laser impulsionnel multi spectral selon l'une des revendications précédentes, **caractérisé en ce que** l'énergie par impulsion est supérieure à 1 mJ, et la puissance moyenne supérieure à 10 W.

**Patentansprüche**

**1.** Vorrichtung zur Verstärkung eines Multiwellenlängen-Laserstrahlimpulses (2), die umfasst:

- ein festes Verstärkungsmedium (1) mit dem Refraktionsindex $n_1$, mit zwei ebenen Seiten, einer Vorderseite (12), die bestimmt ist, den sog. einfallenden, zu verstärkenden Strahl (2) zu empfangen, und einer reflektierenden Rückseite (11), wobei die Vorderseite (12) im Verhältnis zu seiner Rückseite (11) in einer ersten Neigung ungleich Null geneigt ist,
- eine Kühlvorrichtung des Verstärkungsmediums (1) mittels der Rückseite (11),

**dadurch gekennzeichnet, dass** sie ferner ein trapezförmiges Prisma (4) mit einem Refraktionsindex $n_2$ mit einer Eingangsseite und einer Ausgangsseite umfasst, die untereinander eine zweite Neigung ungleich Null bilden, wobei sich dieses Prisma an einer Stelle befindet, die bestimmt ist, auf der Bahn des von der Rückseite (11) reflektierten Strahls und von der Vorderseite (12) des Verstärkungsmediums (1) refraktierten Strahls (6) zu liegen, und wobei die erste und zweite Neigung derart sind, das die Strahlen jeder Wellenlänge beim Ausgang aus dem Prisma (4) parallel zueinander sind.

**2.** Vorrichtung zur Verstärkung eines Multiwellenlängen-Laserstrahlimpulses nach vorangehendem Anspruch, **dadurch gekennzeichnet, dass** die Vorderseite des Verstärkungsmediums (12) senkrecht zu einer Achse Oz ist, wobei die erste Neigung einen Winkel $\beta'_1$ auf einer Ebene yOz und $\beta''_1$ auf einer Ebene xOz bildet, wobei die zweite Neigung einen Winkel $\beta'_2$ auf der Ebene yOz und $\beta''_2$ auf der Ebene xOz bildet, was ergibt:

$$2\beta'_1 . \Delta n_1 = \beta'_2 . \Delta n_2 \quad \text{und} \quad 2\beta''_1 . \Delta n_1 = \beta''_2 . \Delta n_2$$

**3.** Vorrichtung zur Verstärkung eines Multiwellenlängen-Laserstrahlimpulses nach einem der vorangehenden Ansprüche, **dadurch gekennzeichnet, dass** $n_1 >> (n_1-1) / v_1$, wobei $v_1$ der Reziprokwert der Dispersionskraft des Verstärkungsmediums ist.

**4.** Vorrichtung zur Verstärkung eines Multiwellenlängen-Laserstrahlimpulses nach einem der vorangehenden Ansprüche, **dadurch gekennzeichnet, dass** die Vorderseite (12) des Verstärkungsmediums bestimmt ist, den einfallenden Strahl (2) zu empfangen und einen sog. Störstrahl (5) zu reflektieren, wobei sich das Prisma (4) außerhalb der Bahn dieses Störstrahls befindet.

**5.** Vorrichtung zur Verstärkung eines Multiwellenlängen-Laserstrahlimpulses nach einem der vorangehenden Ansprüche, **dadurch gekennzeichnet, dass** die Vorderseite (12) des Verstärkungsmediums antireflex ist.

**6.** Vorrichtung zur Verstärkung eines Multiwellenlängen-Laserstrahlimpulses nach einem der vorangehenden Ansprüche, **dadurch gekennzeichnet, dass** $n_1 = n_2$ ist.

**7.** Vorrichtung zur Verstärkung eines Multispektral-Laserstrahlimpulses nach einem der vorangehenden Ansprüche, **dadurch gekennzeichnet, dass** sie einen Filterschirm umfasst, der sich an einer Stelle befindet, die bestimmt ist, auf dem Weg des von der Vorderseite (12) des Verstärkungsmediums reflektierten Strahls (5) zu sein.

**8.** Vorrichtung zur Verstärkung eines Multispektral-Laserstrahlimpulses nach einem der vorangehenden Ansprüche, **dadurch gekennzeichnet, dass** das Verstärkungsmedium (1) ein Kristall oder ein Glas oder ein Polymer ist.

**9.** Vorrichtung zur Verstärkung eines Multispektral-Laserstrahlimpulses nach einem der vorangehenden Ansprüche, **dadurch gekennzeichnet, dass** die Energie je Impuls über 1 mJ und die mittlere Leistung über 10 W betragen.

**Claims**

**1.** A device for amplifying a multiple wavelength pulsed laser beam (2) comprising:

- a solid amplifying medium (1) with a refractive index $n_1$, with two planar faces, a front face (12) intended to receive the beam to be amplified, called incident beam (2), and a reflective rear face (11), the front face (12) being inclined relative to its rear face (11) by a first non-zero incline;
- a device for cooling the amplifying medium (1) by the rear face (11), **characterized in that** it further comprises a trapezoidal prism (4) with a reflective index $n_2$, with an input face and an output face that together form a second non-zero incline, said prism being located at a location that is intended to be on the path of the beam (6) reflected by the rear face (11) and refracted by the front face (12) of the amplifying medium (1), and the first and second inclines being such that the beams of each wavelength are parallel to each other at the output of the prism (4).

**2.** The device for amplifying a multiple wavelength pulsed laser beam according to the preceding claim, **characterized in that**, with the front face (12) of the amplifying medium (12) being perpendicular to an axis Oz, the first incline forming an angle $\beta_1$ on a plane yOz and $\beta'_1$ on a plane xOz, the second incline forming an angle $\beta_2$ on the plane yOz and $\beta'_2$ on the plane xOz, then:

$$2\beta'_1 . \Delta n_1 = \beta'_2 . \Delta n_2 \text{ and } 2\beta''_1 . \Delta n_1 = \beta''_2 . \Delta n_2$$

**3.** The device for amplifying a multiple wavelength pulsed laser beam according to any one of the preceding claims, **characterized in that** $n_1 \gg (n_1-1)/v_1$, with $v_1$ being the constringence of the amplifying medium.

**4.** The device for amplifying a multiple wavelength pulsed laser beam according to any one of the preceding claims, **characterized in that**, with the front face (12) of the amplifying medium being intended to receive the incident beam (2) and reflect a beam, called parasitic beam (5), the prism (4) is located outside of the path of said parasitic beam.

**5.** The device for amplifying a multiple wavelength pulsed laser beam according to any one of the preceding claims, **characterized in that** the front face (12) of the amplifying medium is anti-reflective.

**6.** The device for amplifying a multiple wavelength pulsed laser beam according to any one of the preceding claims, **characterized in that** $n_1 = n_2$.

**7.** The device for amplifying a multispectral pulsed laser beam according to any one of the preceding claims, **characterized in that** it comprises a filtering screen located at a location that is intended to be on the path of the beam (5) reflected by the front face (12) of the amplifying medium.

**8.** The device for amplifying a multispectral pulsed laser beam according to any one of the preceding claims, **characterized in that** the amplifying medium (1) is a crystal or a glass or a polymer.

**9.** The device for amplifying a multispectral pulsed laser beam according to any one of the preceding claims, **characterized in that** the energy per pulse is higher than 1 mJ and the average power is higher than 10 W.

FIG.1a

FIG.1b

FIG.2a

FIG.2b

FIG.2c